# EUROPEAN PATENT SPECIFICATION

(11) **EP 2 962 938 B1**
(45) Date of publication and mention of the grant of the patent: **25.04.2018**
(21) Application number: 15175018.9
(22) Date of filing: 02.07.2015
(51) Int. Cl.: B64D 11/02

(54) **AIRCRAFT LAVATORY AND GALLEY SEPARATED BY AN INTERNAL WALL HAVING AN INTERMEDIATE NOTCH THAT IMPROVES THE LAVATORY ENVIRONMENT**
FLUGZEUGTOILETTE UND BORDKÜCHE, DIE VON EINER INNENWAND MIT EINER ZWISCHENEINKERBUNG GETRENNT WERDEN, DIE DIE WASCHRAUMUMGEBUNG VERBESSERT
OFFICES ET TOILETTES POUR AVION SÉPARÉS PAR UNE PAROI INTERNE PRÉSENTANT UN DÉGAGEMENT INTERMÉDIAIRE QUI AMÉLIORE L'ENVIRONNEMENT DES TOILETTES

(30) Priority: 02.07.2014 US 201414322582
(43) Date of publication of application: 06.01.2016
(73) Proprietor: The Boeing Company, Chicago, IL 60606-1596 (US)
(72) Inventor: BOREN, Kelly L., Chicago, IL 60606 (US); SANKRITHI, Mithra M. K. V., Chicago, IL 60606 (US)
(74) Representative: Bartelds, Erik

(56) References cited:
- EP-A1- 2 492 195
- EP-A2- 2 148 017
- EP-A2- 2 716 545
- WO-A1-2014/057667
- WO-A2-2004/076279
- DE-A1-102006 023 047
- FR-A1- 2 941 917
- JP-A- 2008 239 036

## Description

### FIELD

The present disclosure pertains to the configuration of an internal wall in an aircraft cabin that separates a lavatory and a galley of the aircraft. In particular, the present disclosure pertains to an aircraft cabin having a lavatory and galley separated by an internal wall, where the internal wall has an intermediate notch that increases a lateral width dimension of the lavatory above the notch and thereby improves the environment and enhances the functionality and ergonomics of the lavatory. More specifically, the disclosure relates to an aircraft as defined in the pre-characterizing part of claim 1. Such an aircraft is known from EP 2 716 545 A2.

### BACKGROUND

Commercial aircraft set up for the transportation of passengers typically include rows of seats along the length of the aircraft cabin that are separated by a central aisle, at least one galley in the cabin, and one or more lavatories in the cabin. Because the primary purpose of a commercial aircraft is to transport passengers, the aircraft cabin is usually set up to maximize the number of seats in the cabin. As a result, it is challenging to provide adequate lavatory space without reducing seat count.

A typical passenger aircraft includes at least one lavatory enclosure that is positioned along the central aisle of the aircraft among the rows of seats. The lavatory enclosure is accessed through a doorway from the central aisle. The width of the lavatory enclosure is typically not much larger than the width of the doorway. The dimensions of the lavatory enclosure often make it difficult for a user to move around in the enclosure, much less provide comfortable elbow room in the enclosure. Thus, passengers who are above median height and weight and are using conventional aircraft lavatories may feel uncomfortably confined in the lavatory enclosure.

The above-identified prior art document EP 2 716 545 A2 by the same inventors as the present application already discloses an aircraft having a lavatory enclosure that is repositioned in the aircraft cabin away from the rows of the seats and the central aisle. The lavatory enclosure of this prior art document is moved to a position adjacent a cross-aisle at the rear of the aircraft cabin that provides access to two aircraft cabin doors on laterally opposite sides of the aircraft. An internal wall in the aircraft cabin separates the lavatory and a galley of the aircraft. The internal wall has an intermediate notch that increases a lateral width dimension of the lavatory above the notch and thereby improves the spatial environment of the lavatory.

Prior art document DE 10 2006 023 047 A1 discloses a modular galley for an aircraft which has connection units for mechanically connecting two structure units, a sales counter shelf, a porch, fixtures, installation devices, trolleys and storage compartments that are provided on a base unit. Interfaces for accommodation of the installation devices in the galley are provided on the base unit. The connection unit and the interfaces are standardized such that the structure units, the shelf, the porch, the fixtures, the installation devices, the trolleys and the compartments are replaced against each other and installed at different positions. The galley includes one highly flexible multi-purpose compartment which is shown to have an opening in the side wall which is closed by a vertically sliding door and a front opening which may be closed by a rolling shutter.

### SUMMARY

The aircraft lavatory enclosure of the present disclosure overcomes the disadvantages associated with prior art aircraft lavatory enclosures discussed above. This is accomplished in an aircraft of the type defined in the preamble of claim 1 by:
a vertical partition attached to the first internal wall upper section, the partition being moveable between an open position and a closed position in which it can be locked, where in the closed position the partition extends laterally over the counter surface between the first internal wall upper section and the second internal wall upper section, and in the open position the partition is displaced from over the counter surface; and,
the first internal wall upper section being moveable between an opened position and a closed position, where in the closed position, the first internal wall upper section extends between the first internal wall intermediate section and the counter surface separating the lavatory from the counter surface, and in the open position, the first internal wall upper section extends over the counter surface providing access from the lavatory to the counter surface.

Both the first internal wall upper section and the second internal wall upper section may be moveable between open positions and closed positions. In the closed positions of the upper sections, the upper sections may extend between the internal wall intermediate sections and the counter surface, separating the first and second lavatories from the counter surface. In the open positions the first internal wall upper section and the second internal wall upper section may be pivoted outwardly over the counter surface, providing access to the counter surface from both lavatories and communication between the two lavatories behind the closed partition.

In a variant of the lavatory embodiment with the partition and moveable internal wall upper section, a stationary vertical wall may be positioned in the middle of the counter surface and the partition may only open to the stationary vertical wall. The internal wall upper section can be pivoted open over the counter surface behind the closed partition, providing a counter surface in the lavatory that could be used as a changing table or for other purposes.

In addition to the increased usable space in the lavatory provided by the notch formed in the internal wall, further modifications have been made to the lavatory to give the impression of spaciousness. Each of the modifications may be applied to one lavatory, or the modifications may be used in various different combinations in different lavatories.

In the embodiment defined in claim 2, a collapsible shelf has been added to the lavatory internal wall. The collapsible or folding shelf is moveable between the horizontal position where the shelf can support toiletry items, and a vertical position of the folding shelf where the shelf does not extend into the space of the lavatory.

Claim 3 defines an embodiment in which, to assist larger passengers, a grab handle has been added to the internal wall of the lavatory. The enhanced spaciousness provided by the construction of the internal wall enables the addition of the grab handle. The grab handle will be useful to passengers using the lavatory during a rough flight and for larger passengers using the lavatory.

In claim 4 an embodiment of the lavatories with the counter surface between the lavatories is defined, in which indirect lighting is provided above the internal wall upper section. The indirect lighting positioned above the internal wall upper section provides light to both the lavatory and the counter surface.

In the embodiment of claim 5 an outboard window, possibly with a window shade has been added to the lavatory. The window could be an actual window with a view outside the aircraft, or a faux window. The open window improves the feeling of spaciousness in the lavatory.

Claim 6 defines an embodiment wherein, in addition to the addition of a grab handle in the lavatory to assist larger passengers, the internal wall of one of the lavatories is moved further inboard than the internal wall of the second of the lavatories. This creates a wider lavatory in which the toilet also can be moved further inboard. This wider lavatory with the toilet moved slightly inboard is provided to accommodate larger passengers.

In claim 7 an embodiment is defined in which the internal wall intermediate section has been lowered from its position above the stowage space or galley cart space to a position in line with the toilet seat of the lavatory. This provides additional hip room in the lavatory and enables the toilet to be moved inboard slightly away from the outboard interior side wall, further enhancing the spaciousness of the lavatory.

In still a further embodiment of the counter surface between the two lavatories as defined in claim 8, a waste bin is provided beneath the counter surface. An access opening is provided in the counter surface providing access to the waste bin. A further access opening is provided in the lavatory internal wall with the further access opening providing access to the same waste bin.

Claim 9 defines an embodiment in which the lavatory internal wall upper section has been curved or angled to increase the elbow room in the lavatory. The internal wall upper section has opposite left and right side edges and an intermediate portion of the internal wall between the edges. The intermediate portion of the internal wall upper section extends away from the lavatory as the internal wall upper section extends from the opposite left and right edges toward the intermediate portion.

And finally, in claim 10 an embodiment is defined in which the lavatory floor inside the lavatory has been ramped downward. The lavatory floor surface has a front edge at the floor surface of the aircraft cabin and a longitudinally opposite rear edge. As the lavatory floor surface extends from the front edge to the rear edge, the floor surface declines vertically downward from horizontal. This gives the lavatory an inch or more of additional standing height at the rear of the lavatory.

In still a further embodiment of the pair of lavatories separated by a galley or stowage space, the counter surface provided over the stowage space may be moveable rearwardly. This enables service carts to be positioned under the counter surface with one service cart in front of a second service cart. Moving the counter surface forward would cover the inline service carts, and pushing the counter surface backward or pivoting the counter surface backward would provide access to the second service cart behind the first service cart.

The features, functions and advantages that have been discussed can be achieved independently in various embodiments or may be combined in yet other embodiments further details of which can be seen with reference to the following description and drawings.

### BRIEF DESCRIPTION OF THE DRAWINGS

Further features of the aircraft lavatory of the disclosure are set forth in the following detailed description of the aircraft and in the drawing figures.
Figure 1 is a representation of a front perspective view of the aircraft lavatory showing part of the features of the invention.
Figure 2 is a representation of a front view of the lavatory of the disclosure at the rear of the aircraft cabin showing part of the features of the invention.
Figure 3 is a representation of a portion of a conventional aircraft floor plan at the rear of the aircraft cabin showing the typical locations of lavatories of the aircraft relative to the passenger seating and the galley of the aircraft showing part of the features of the invention.
Figure 4 is a representation of the floor plan at the rear of the aircraft of the disclosure with the relocated lavatory of the disclosure showing part of the features of the invention.
Figures 5-7 are representations of further embodiments of the aircraft lavatories having modifications made to the lavatories to give the impression of spaciousness.
Figure 8 is a representation of an embodiment according to the present invention having modifications made to the lavatories to give the impression of spaciousness.
Figures 9-11 are representations of further embodiments of the aircraft lavatories showing part of the features of the invention and having modifications made to the lavatories to give the impression of spaciousness.

### DESCRIPTION

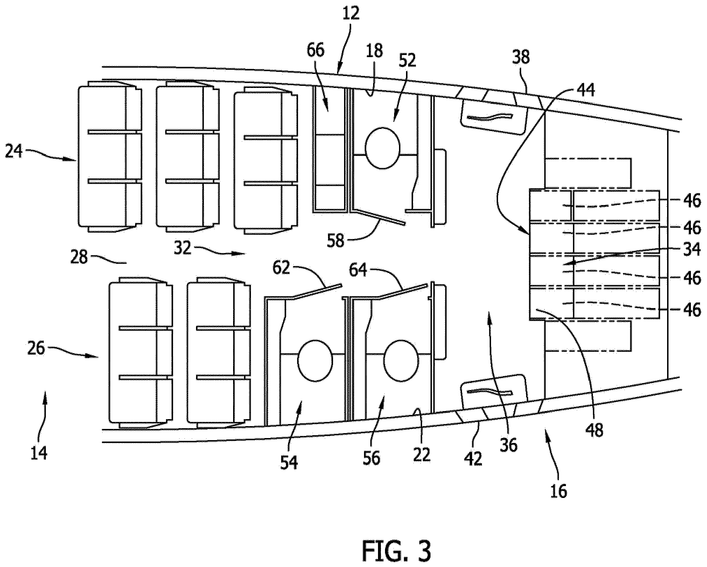

Figure 3 is a representation of the floor plan at the rear of a typical aircraft cabin where lavatories of the aircraft are located. In Figure 3 a rearward portion of the aircraft fuselage or body 12 that surrounds the aircraft cabin is shown in cross section. As is conventional, the aircraft cabin has a longitudinal length between a front 14 of the cabin and a rear 16 of the cabin. The cabin also has a lateral width between opposite first 18 and second 22 interior sidewalls of the aircraft body.

A plurality of rows of seats 24, 26 may be arranged on the floor surface 28 of the aircraft cabin. The rows of seats 24, 26 may also be arranged on laterally opposite sides of the cabin and define a central aisle 32. The central aisle 32 may also extend longitudinally through the cabin across the floor surface 28 between the front 14 and rear 16 of the cabin and between the rows of seats 24, 26. A galley 34 may be provided in the rear of the cabin at the rearward end of the central aisle 32. This space could be used for other purposes and could be broadly described as a stowage space 34.

A cross aisle 36 may extend laterally across the rear 16 of the cabin in front of the galley 34. The cross aisle 36 may extend between a pair of boarding doors 38, 42 in the respective sidewalls 18, 22 of the aircraft body.

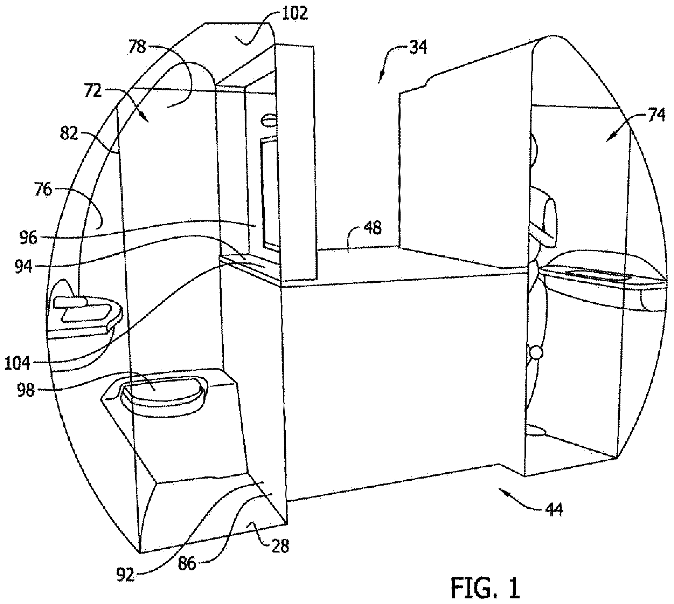

The galley 34 may typically include a galley cart compartment 44 containing a plurality of galley carts 46. In the example shown in Figure 1 the galley cart compartment 44 contains four galley carts 46. Each galley cart 46 is supported by rollers on the floor surface 28 and is inserted longitudinally into a slot provided for the cart in the compartment 44. The galley 34 also includes a counter surface 48, also commonly referred to as a countertop, on top of the compartment 44. Although not shown, the galley 34 also may include appliances such as a coffee maker, a hotplate, a microwave oven, etc. above the counter surface 48.

Galley equipment is produced according to basically two worldwide standards, namely ATLAS and KSSU. These have their origins in the industry in legacy maintenance resource pools (ATLAS = Alitalia, TAP, Lufthansa, Air France, Sabena and KSSU = KLM, Swissair, SAS, UTA) and have subsequently developed into industry standards to enable modular equipment interchange between aircraft of different manufacturers.

Each piece of ATLAS standard equipment is preferably able to fit in any ATLAS galley on any aircraft type of any airline worldwide. The same is true for the KSSU standard equipment. ATLAS equipment is today's leader for worldwide market share with about 75% of galley equipment manufactured being either ATLAS standard or ATLAS compatible. KSSU has about a 20% market share and a handful of legacy air lines with proprietary standards (BA has a proprietary standard called "ACE" for example) account for the remaining 5%.

Equipment standards for ATLAS and KSSU include specifications for most anything ranging from carts to oven racks to coffeepots to plastic cups to storage boxes. A variation of even a single millimeter from the standard specifications for galley equipment could result in equipment not being able to stow securely and the consequent safety issues that result.

Most equipment is actually manufactured by the same companies. For example, rotatable or movable equipment (carts, etc.) are manufactured by companies such as Driessen and Diethelm-Keller. Consumables such as trays, cups, etc. are manufactured by companies such as DeSter and Helios. These companies either provide airlines with branded or generic versions of existing designs or developed entirely new product lines within the existing standards.

In the example shown in Figure 3, the aircraft includes three lavatory enclosures 52, 54, 56. Each of the enclosures is accessible through a respective door 58, 62, 64 of the enclosures 52, 54, 56. A small coat closet 66 is also provided in the cabin. As can be seen in Figure 1, the width dimension of each of the lavatory enclosures 52, 54, 56 is set in order to maximize the passenger seating in the aircraft cabin. The width of each lavatory enclosure 52, 54, 56 is not much larger than the width of its respective door 62, 64, 66. The dimensions of the lavatory enclosures 52, 54, 56 often make it difficult for a user to enter the enclosure from the central aisle 32 and move around in the enclosure, much less provide comfortable elbow room in the enclosure. The narrow width of the enclosures 52, 54, 56 may result in passengers using the lavatories feeling uncomfortably confined in the enclosures.

The aircraft lavatory enclosure of the present disclosure overcomes the disadvantages associated with prior art aircraft lavatory enclosures discussed above. This is accomplished by repositioning the lavatory enclosure in the aircraft cabin away from the rows of the seats and the central aisle. The enclosure is moved to a position rearwardly of the cross-aisle 36 at the rear of the aircraft cabin. Moving the aircraft lavatory to a position rearwardly of the cross-aisle 36 enables the lavatory enclosure to be reconfigured to make the best use of available space at the rear of the aircraft cabin.

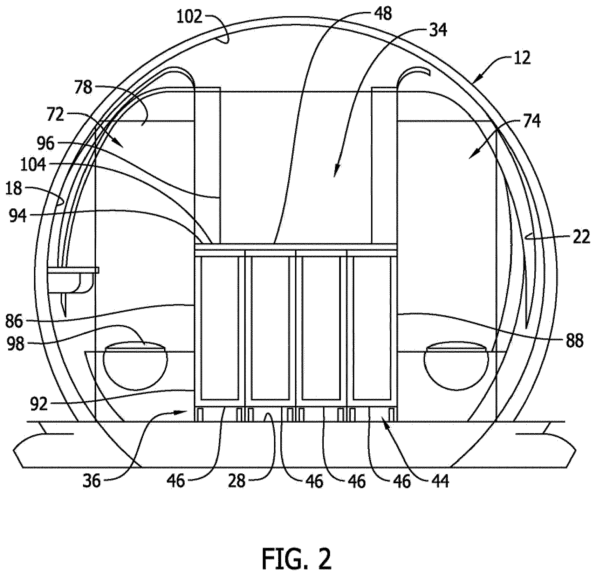

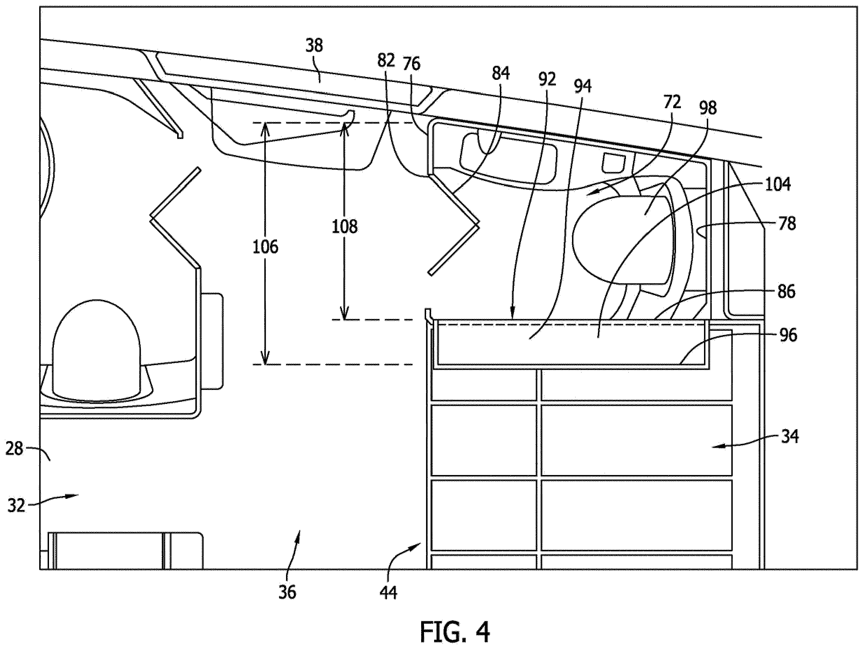

Figure 2 is a front elevation view of a pair of lavatories 72, 74 of an embodiment of the present disclosure that have been installed at the rear of the aircraft cabin shown in Figure 1. The lavatories 72, 74 are positioned rearwardly of the cross-aisle 36 and on laterally opposite sides of the galley 34. In comparing Figures 1 and 2, it can be seen that the lavatories 72, 74 have been positioned in areas available between the galley 34 and the opposite first 18 and second 22 interior sidewalls of the aircraft body. Figure 1 is a perspective view of a pair of lavatories of the disclosure, and Figure 4 is a plan view of one of the lavatories of the disclosure. In the embodiments shown in Figures 1 and 2 the pair of lavatories may include a first 72 and second 74 lavatory that are mirror images of each other. However, it is not necessary that the first 72 and second 74 lavatories be the same, and the lavatories could have different constructions with different features and floor plans. Only the first lavatory 72 will be described in detail.

Referring to Figure 2, the lavatory 72 may include a front wall 76 as part of its enclosure. The aircraft body first internal sidewall 18 and a rear bulkhead wall 78 of the aircraft may also form portions of the enclosure of the lavatory. The front wall 76 may have a doorway 82 that is accessible from the cross-aisle 36. A door 84 is secured to the front wall 76 and can be manually operated to selectively open and close the doorway 82 in a conventional manner. The door 84 selected for the lavatory 72 may be a double fold door that basically folds into the area of the lavatory 72 when opening the door. This prevents the door 84 from obstructing movement through the cross aisle 36 at the rear of the cabin.

In addition, the enclosure of the lavatory 72 includes an internal wall 86. The internal wall 86 may be positioned laterally between the galley 34 and the lavatory 72. In a further embodiment an aircraft may contain two lavatories 72, 74 in the aircraft cabin. The two lavatories 72, 74 may be arranged such that, a pair of internal walls 86, 88 in the cabin separate each of the respective lavatories 72, 74 from the galley 34 at the center of the cabin.

The first internal wall 86 is comprised of a lower section 92, an intermediate section 94 and an upper section 96. Each of the sections may be interconnected as seen in the drawing figures. Additionally, each of the wall sections extend longitudinally through the cabin from the lavatory enclosure front wall 76 to the rear bulkhead wall 78, thereby completing the lavatory enclosure.

The wall lower section 92 may extend vertically upwardly from the floor surface 28 between a lower area of the adjacent lavatory 72 and a lower area of the galley 34. The lower section 92 may be perpendicular to the floor surface 28 and extends upwardly from the floor surface to the wall intermediate section 94. The height of the lower section 92 may position the intermediate section 94 at a position vertically above the toilet 98 in the lavatory 72. Additionally, the height of the lower section 92 may position the intermediate section 94 vertically above the galley cart compartment 44.

The intermediate section 94 extends horizontally from the lower section 92 over the lower area of the galley 34 and the galley cart compartment 44 and inboard or toward the centerline of the airplane from the lavatory 72. The intermediate section 94 extends from the lower section 92 to the wall upper section 96. As shown in Figures 2 and 3, the intermediate section 94 may be coplanar with the galley counter surface 48. In an alternative embodiment, the intermediate section 94 may be continuous with the galley counter surface 48. In a further embodiment a single structure may form the wall intermediate section 94 and the galley counter surface 48. The intermediate section 94 also adds a countertop 104 to the lavatory 72. Depending on the type of equipment employed in the galley, for example whether ATLAS or KSSU equipment is used, and what quantities of equipment, for example whether four carts or three carts are used, the intermediate section 94 could have a lateral width dimension ranging from 2 inches to 20 inches (approx. 51 to 510 mm). In other environments, the intermediate section 94 could have other lateral width dimensions and other orientations than the horizontal orientation shown.

The wall upper section 96 may extend vertically upwardly from the intermediate section 94 between an upper area of the lavatory and an upper area of the galley to the roof 102 of the aircraft cabin. The intermediate section 94 positions the upper section 96 laterally further inboard from the first interior sidewall 18 of the aircraft body from the lower section 92. Thus as shown in Figure 4, the lateral width dimension 106 of the lavatory 72 above the intermediate section 94 is larger than the largest lateral width dimension 108 of the lavatory 72 below the intermediate section 94. Furthermore, the intermediate section 94 and the upper section 96 together form a notch in the lavatory 72 that provides additional area to the lavatory. The increase in the lavatory width above the intermediate section 94 provides more usable space in the lavatory for passengers using the lavatory, while still retaining the small footprint of the lavatory on the floor surface 28 between the lower section 92 and the first interior sidewall 18. The increased usable space gives a lavatory an impression of spaciousness and a more comfortable atmosphere.

With the modification of the rear of the aircraft cabin shown in Figure 1 by the repositioned lavatories of the disclosure, the lavatory enclosures 52, 54, 56 shown at the rear of the aircraft cabin 16 in Figure 3 can be removed, enabling the addition of more passenger seating to the aircraft and thereby improving the economic efficiency of the aircraft.

As stated earlier, in addition to the increased usable space in the lavatory provided by the notch formed in the internal wall, further modifications are made to the lavatory to give the impression of spaciousness. The features of the modifications to be described may or may not be included in one lavatory. The features can be used in various combinations in various different lavatories.

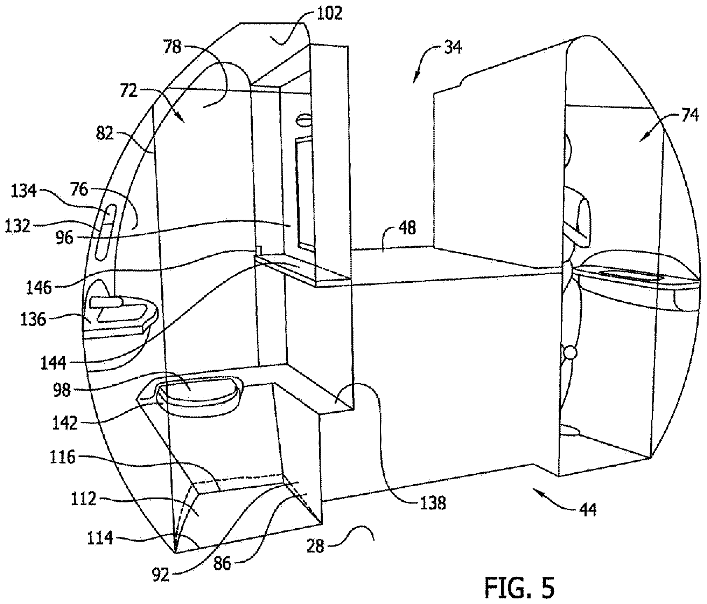

Referring to Figure 5, the lavatory floor surface 112 inside the lavatory has been ramped downward. The lavatory floor surface 112 has a front edge 114 at the floor surface 28 of the aircraft cabin and a longitudinally opposite rear edge 116. As the lavatory floor surface 112 extends from the front edge 114 to the rear edge 116, the lavatory floor surface 112 declines vertically downward from the horizontal plane represented in dashed lines in Figure 5 of the aircraft cabin floor surface 28.

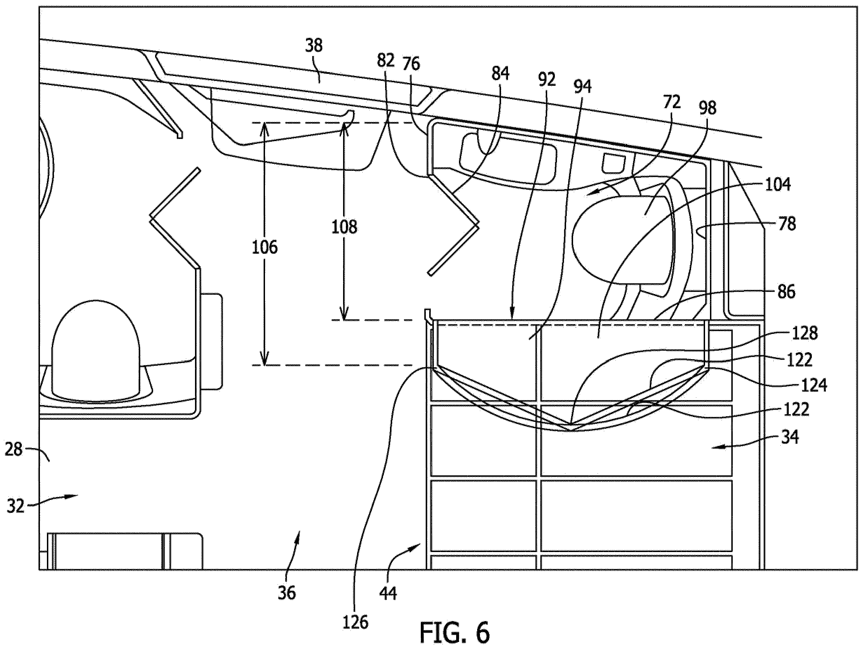

Referring to Figure 6, the lavatory inner wall upper section 122 is curved or angled outwardly from the lavatory to increase the elbow room in the lavatory. The inner wall upper section 122 has opposite left 124 and right 126 side edges and an intermediate portion 128 of the internal wall upper section 122 between the edges. The intermediate portion 128 of the internal wall upper section 122 extends away from the lavatory as the internal wall upper section 122 extends from the opposite left 124 and right 126 edges toward the intermediate portion 128.

Referring to Figure 5, an outboard window 132 with a window shade 134 is provided for the lavatory just above the sink 136. The window 132 could be an actual window with a view outside the aircraft, or a faux window that provides translucent light without direct viewing. A user of the lavatory can open the window shade 134 to improve the feeling of spaciousness in the lavatory.

Referring to Figure 5, the internal wall intermediate section 138 has been lowered from its position above the stowage space or galley cart space to a position in line with the toilet seat 142 of the lavatory. This provides additional hip and elbow room in the lavatory.

Also represented in Figure 5 is a collapsible or folding shelf 144 that has been added to the lavatory internal wall. The folding shelf 144 is attached to the internal wall by a hinge or other equivalent mechanism for pivoting movement between its horizontal position shown in Figure 5 and a vertical position where the hinge mechanism suspends the shelf 144 vertically downward from the internal wall. In the vertical position the shelf 144 does not extend into the space of the lavatory. One or more releasable latches 146 could be provided on the shelf 144 to hold the shelf in its horizontal position. In the horizontal position of the shelf 144, the shelf could be used to support toiletry items or other types of items used by the occupant of the lavatory.

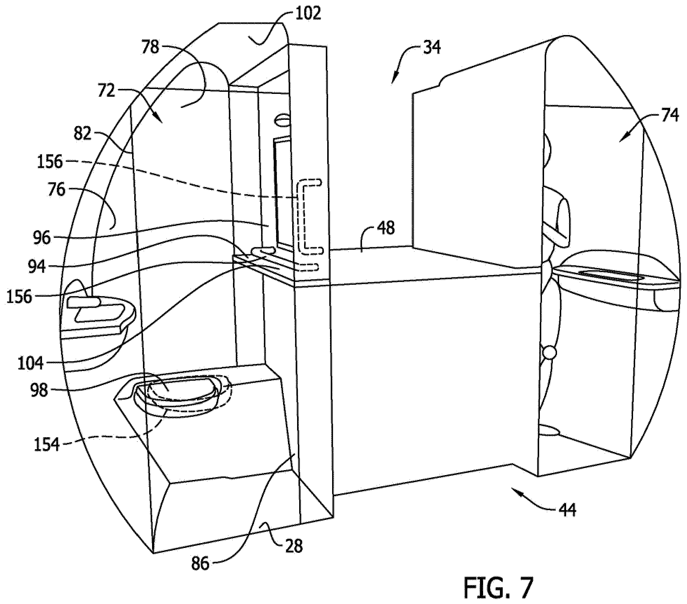

Figure 7 shows a representation of the lavatory in which the internal wall lower section 152 has been moved inboard to the same plane as the internal wall upper section 96. This creates a wider lavatory in which the toilet can be moved further inboard as represented by the dashed lines 154 in Figure 7. This wider lavatory with the toilet moved slightly inboard is provided to accommodate larger passengers. It also provides the aircraft with the option of using a lavatory of a conventional width such as the second lavatory 74, or using a lavatory with a larger width.

To assist larger passengers, a grab handle 156 is added to the internal wall of the lavatory represented in Figure 7. As represented in Figure 7, the grab handle(s) 156 could be oriented horizontally or vertically or both. The grab handle 156 will be useful to passengers using the lavatory during a rough flight or for larger passengers using the lavatory.

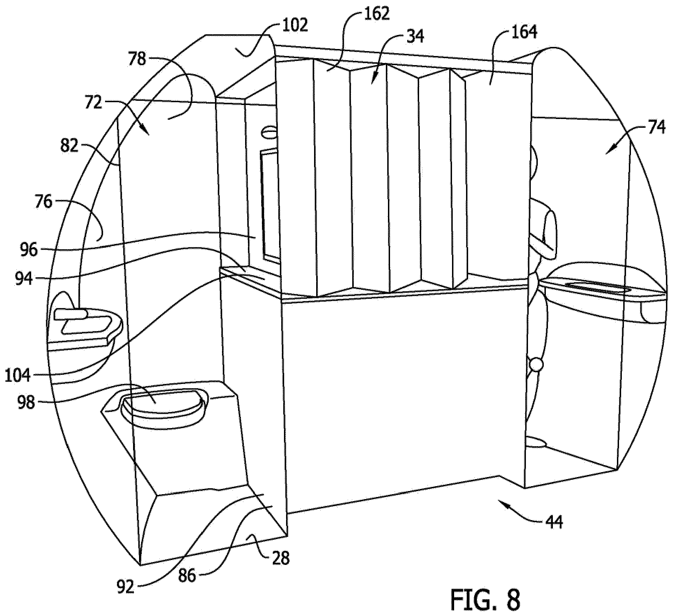

Figure 8 is a representation of a further embodiment (according to the invention) of the pair of lavatory enclosures 72, 74 in which the pair of lavatories are able to be communicated with each other to enable communication between family members using both lavatories. As in the previous embodiments, the counter surface 48 is positioned above the stowage area or galley cart compartment 44. The counter surface 48 is continuous with the first internal wall intermediate section 94 of the first lavatory 72 and the second internal wall intermediate section (not shown) of the second lavatory 74. A foldable vertical partition 162 is attached to the first internal wall upper section 96 along a right side of the first internal wall upper section 96. The partition 162 is positioned above a front edge of the counter surface 48. As represented in Figure 8, the partition 162 is moveable between an open position and a closed position. In the closed position the partition 162 extends laterally, left to right as viewed in Figure 8 over the counter surface 48 adjacent the counter surface front edge. The closed partition extends from the first internal wall upper section 96 to the second internal wall upper section 164. In the closed position the partition 162 can be locked by a family member in the second lavatory 74. In the open position the partition 162 is moved to the left as represented in Figure 8 and is displaced from over the counter surface 48. The open partition 162 is folded up next to the first internal wall upper section 96.

The first internal wall upper section 96 and the second internal wall upper section 164 are connected by pivoting devices to the rear bulkhead wall 78. This enables both the first internal wall upper section 96 and the second internal wall upper section 164 to be pivoted between open and closed positions. In the closed positions the first internal wall upper section 96 and the second internal wall upper section 164 both extend across their respective intermediate sections between the intermediate sections and the counter surface 48. The first internal wall upper section 96 and the second internal wall upper section 164 can both be locked in their closed positions separating the first 72 and second 74 lavatories from the counter surface 48. In the open positions the first internal wall upper section 96 and the second internal wall upper section 164 are pivoted outwardly about their pivot connections over the counter surface 48 until the sections are substantially flat against the rear bulkhead wall 78. This provides access to the counter surface 48 from both lavatories 72, 74 and communication between the two lavatories behind the closed partition 162.

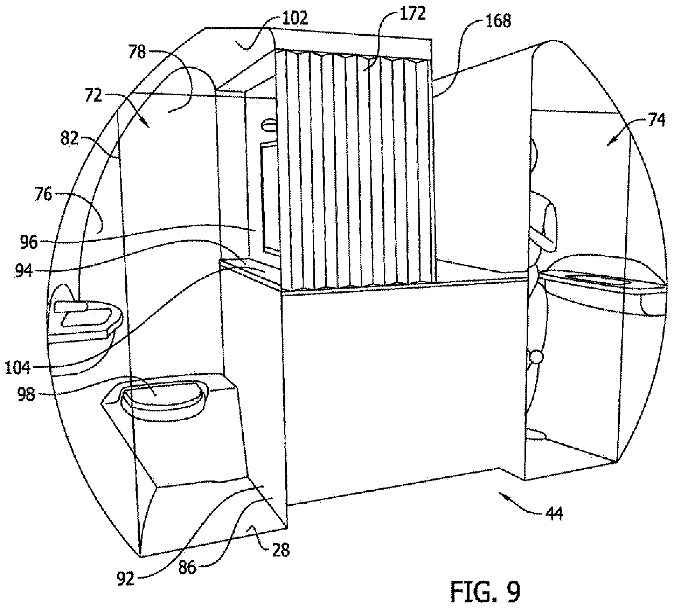

Figure 9 is a variant embodiment of the lavatories represented in Figure 8. In the embodiment of Figure 9 a stationary vertical wall 168 is positioned in the middle of the counter surface 48. The vertical wall 168 extends vertically to the ceiling of the aircraft and longitudinally from the counter surface front edge to the rear edge of the counter surface and the rear bulkhead wall 78. In the Figure 9 embodiment the partition 172 is partially expandable to the stationary vertical wall 168 and can be locked in its closed position to the vertical wall 168. The internal wall upper section 96 of the first lavatory 72 can be opened and closed in the same manner as that described with reference to Figure 8. Thus, with the internal wall upper section 96 pivoted open over the counter surface 48 behind the closed partition 172, a large counter surface is provided in the first lavatory 72 that can be used as a changing table or for other purposes.

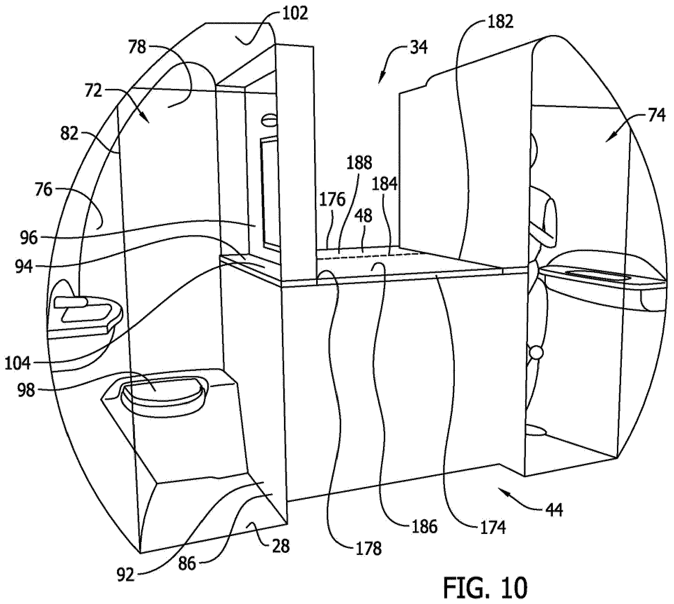

Figure 10 is a representation of a still further embodiment of the pair of lavatories 72, 74 separated by the galley or stowage space 44. In the embodiment of Figure 10 the counter surface 48 has a front edge 174 and an opposite rear edge 176, a left side edge 178 and an opposite right side edge 182 as viewed in Figure 10. Additionally, there is a joint represented by the dashed line 184 between a front portion 186 and a rear portion 188 of the counter surface 48. The joint 184 enables the counter front portion 186 and the counter front edge 174 to be moved rearwardly toward the counter rear portion 188 and the counter rear edge 176. The joint 184 could be a hinge joint, could be a joint that enables the counter front portion 186 to slide into the counter rear portion 188, or some other equivalent type of mechanical joint. This connection between the counter front portion 186 and the counter rear portion 188 enables service carts to be positioned under the counter surface 48 with one service cart in front of a second service cart as represented in Figures 3 and 4. Moving the counter surface front portion 186 to its forward position would cover the inline service carts with the counter surface 48. Pushing the counter surface front portion 186 rearward or pivoting the counter surface front portion 186 backward toward the counter surface rear portion 188 will provide access to the second service cart behind the first service cart in the inline arrangement of service carts.

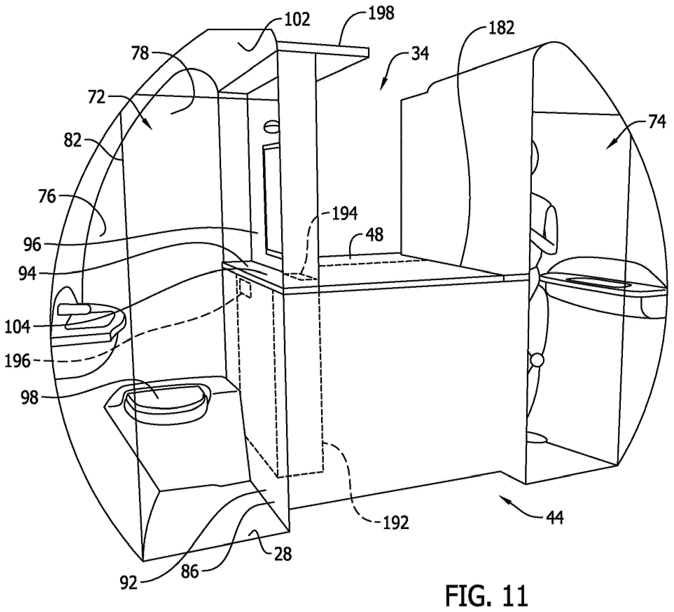

Figure 11 is a representation of a still further embodiment of the lavatory 72. In Figure 11 a waste bin 192 is positioned beneath the counter surface 48 and behind a forward, outboard galley cart (not shown). An access opening 194 with a bin flap is provided through the counter surface 48. The access opening 194 is positioned to provide access to the waste bin 192 through the access opening. A second access opening 196 with a bin flap is provided through the internal wall 86. The second access opening 196 also provides access to the waste bin 192 from the interior of the lavatory 72.

Also represented in Figure 11, in each embodiment of the lavatories with the counter surface between the lavatories, an indirect lighting source 198 is provided above the internal wall upper section 96 and above the counter surface 48. The indirect lighting source 198 positioned above the internal wall upper section 96 provides light to both the lavatory 72 and the counter surface 48.

As various modifications could be made in the construction of the apparatus and its method of operation herein described and illustrated without departing from the scope of the disclosure, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto.

## Claims

1. An aircraft comprising:
an aircraft body (12) containing an aircraft cabin, the aircraft cabin having a longitudinal length between a front of the cabin (14) and a rear of the cabin (16), and the aircraft cabin having a lateral width between opposite first (18) and second (22) interior side walls of the aircraft body (12);
a floor surface (28) in the aircraft cabin;
a lavatory (72 & 74) in the aircraft cabin;
a stowage space (34) in the aircraft cabin;
a horizontal counter surface (48) above the stowage space (34), the counter surface (48) having a front edge and an opposite rear edge, a left edge and an opposite right edge;
a first internal wall (86) in the aircraft cabin laterally between the lavatory (72) and the stowage space (34), the first internal wall (86) having a lower section (92), an intermediate section (94) and an upper section (96) that are all interconnected, the lower section (92) extending vertically upwardly from the floor surface (28) between a lower area of the lavatory (72) and a lower area of the stowage space (34) to the intermediate section (94), the intermediate section (94) being a continuation of the counter surface (48) and extending horizontally over the lower area of the stowage space (34) from the lower section (92) to the upper section (96), and the upper section (96) extending vertically upwardly from the intermediate section (94) between an upper area of the lavatory (72) and an upper area of the stowage space (34), wherein a lateral width dimension of the lavatory (72) above the intermediate section is larger than a largest lateral width dimension of the lavatory (72) below the intermediate section; and
a second internal wall (88) in the aircraft cabin, the second internal wall (88) having a second internal wall upper section (164) that extends upwardly from the counter surface (48) and is spaced laterally from the first internal wall upper section (96);
**characterized by:**
a vertical partition (162) attached to the first internal wall upper section (96), the partition (162) being moveable between an open position and a closed position in which it can be locked, where in the closed position the partition (162) extends laterally over the counter surface (48) between the first internal wall upper section (96) and the second internal wall upper section (164), and in the open position the partition (162) is displaced from over the counter surface (48); and,
the first internal wall upper section (96) being moveable between an open position and a closed position, where in the closed position, the first internal wall upper section (96) extends between the first internal wall intermediate section and the counter surface (48) separating the lavatory (72) from the counter surface (48), and in the open position, the first internal wall upper section (96) extends over the counter surface (48) providing access from the lavatory (72) to the counter surface (48).

2. The aircraft of claim 1, further comprising:
a folding shelf (144) on the first internal wall (86), the folding shelf (144) being moveable between a horizontal position and a vertical position.

3. The aircraft of any of claims 1 to 2, further comprising:
a grab handle (156) on the first internal wall (86).

4. The aircraft of any of claims 1 to 3, further comprising:
a lighting source (198) extending laterally over the first internal wall upper section (96) providing light to the lavatory (72) and to the counter surface (48).

5. The aircraft of any of claims 1 to 4, further comprising:
an outboard window (132) in the lavatory (72).

6. The aircraft of claim 1, wherein:
the first internal wall upper section (96) is spaced a larger distance laterally from the first interior sidewall of the aircraft body (12) than a distance that the second internal wall upper section (164) is spaced laterally from the second interior side wall of the aircraft body (12).

7. The aircraft of claim 1, wherein:
a longitudinal length of the first internal wall upper section (96) is larger than a longitudinal length of the first internal wall lower section (92).

8. The aircraft of any of claims 1 to 7, further comprising:
a waste bin (192) under the counter surface (48);
a first access opening (194) in the counter surface (48) providing access to the waste bin (192); and,
a second access opening (196) in the first internal wall (86) providing access to the waste bin (192).

9. The aircraft of claim 1, wherein:
the first internal wall upper section (122) has left and right edges (124, 126); and,
an intermediate portion (128) of the first internal wall upper section (122) between the left and right edges (124, 126) extends away from the lavatory (72) and toward the counter surface (48).

10. The aircraft of claim 1, wherein:
the lavatory floor surface (112) has a front edge (114) at the floor surface of the aircraft cabin and a longitudinally opposite rear edge (116), the lavatory floor surface (112) sloping downward from horizontal as the lavatory floor surface (112) extends aft from the front edge (114) to the rear edge (116).

## Patentansprüche

1. Flugzeug, das umfasst:
einen Flugzeugkörper (12), der eine Flugzeugkabine umfasst, wobei die Flugzeugkabine zwischen einer Vorderseite (14) der Kabine und einer Hinterseite (16) der Kabine eine längliche Länge aufweist, und wobei die Flugzeugkabine zwischen gegenüber liegenden ersten (18) und zweiten (22) inneren Seitenwänden des Flugzeugkörpers (12) eine seitliche Breite aufweist;
eine Bodenoberfläche (28) in der Flugzeugkabine;
eine Toilette (72 und 74) in der Flugzeugkabine;
einen Stauraum (34) in der Flugzeugkabine;
eine horizontale, oberhalb des Stauraums (34) angeordnete Arbeitsfläche (48), wobei die Arbeitsfläche (48) eine vordere Kante und eine gegenüber liegende hintere Kante, eine linke Kante und eine gegenüber liegende rechte Kante aufweist;
eine erste Innenwand (86) in der Flugzeugkabine, die sich seitlich zwischen der Toilette (72) und dem Stauraum (34) erstreckt, wobei die erste Innenwand (86) einen unteren Abschnitt (92), einen Zwischenabschnitt (94) und einen oberen Abschnitt (96), die alle miteinander verbunden sind, aufweist, wobei der untere Abschnitt (92) sich zwischen einem unteren Bereich der Toilette (72) und einem unteren Bereich des Stauraums (34) von der Bodenoberfläche (28) zu dem Zwischenabschnitt (94) vertikal nach oben erstreckt, wobei es sich bei dem Zwischenabschnitt (94) um eine Fortsetzung der Arbeitsfläche (48) handelt, die sich über dem unteren Bereich des Stauraums (34) von dem unteren Abschnitt (92) zu dem oberen Abschnitt (96) horizontal erstreckt, und wobei der obere Abschnitt (96) sich zwischen einem oberen Bereich der Toilette (72) und einem oberen Bereich des Stauraums (34) von dem Zwischenabschnitt (94) vertikal nach oben erstreckt, wobei eine seitliche Breitenabmessung der Toilette (72) oberhalb des Zwischenabschnitts größer ist als die größte seitliche Breitenabmessung der Toilette (72) unterhalb des Zwischenabschnitts; und
eine zweite Innenwand (88) in der Flugzeugkabine, wobei die zweite Innenwand (88) einen oberen Abschnitt (164) der zweiten Innenwand aufweist, der sich von der Arbeitsfläche (48) nach oben erstreckt und seitlich von dem oberen Abschnitt (96) der ersten Innenwand beabstandet ist;
**gekennzeichnet durch:**
eine vertikale Trennwand (162), die an dem oberen Abschnitt (96) der ersten Innenwand angeordnet ist, wobei die Trennwand (162) zwischen einer offenen Position und einer geschlossenen Position, in der sie verriegelt werden kann, hin und her bewegt werden kann, wobei die Trennwand (162) sich in der geschlossenen Position zwischen dem oberen Abschnitt (96) der ersten Innenwand und dem oberen Abschnitt (164) der zweiten Innenwand seitlich über der Arbeitsfläche (48) erstreckt, und wobei die Trennwand (162) in der offenen Position aus dem Bereich über der Arbeitsfläche (48) verschoben ist; und
wobei der obere Abschnitt (96) der ersten Innenwand zwischen einer offenen Position und einer geschlossenen Position hin und her bewegt werden kann, wobei der obere Abschnitt (96) der ersten Innenwand sich in der geschlossenen Position zwischen dem Zwischenabschnitt der ersten Innenwand und der Arbeitsfläche (48) erstreckt, wobei er die Toilette (72) von der Arbeitsfläche (48) abtrennt, und wobei der obere Abschnitt (96) der ersten Innenwand sich in der offenen Position über der Arbeitsfläche (48) erstreckt und einen Zugang von der Toilette (72) aus zu der Arbeitsfläche (48) ermöglicht.

2. Flugzeug gemäß Anspruch 1, das weiterhin umfasst:
ein klappbares Regal (144) an der ersten Innenwand (86), wobei das klappbare Regal (144) zwischen einer horizontalen Position und einer vertikalen Position hin und her bewegt werden kann.

3. Flugzeug gemäß einem der Ansprüche 1 und 2, das weiterhin umfasst:
einen Haltegriff (156) an der ersten Innenwand (86).

4. Flugzeug gemäß einem der Ansprüche 1 bis 3, das weiterhin umfasst:
eine Lichtquelle (198), die sich seitlich über dem oberen Abschnitt (96) der ersten Innenwand erstreckt und Licht für die Toilette (72) und für die Arbeitsfläche (48) zur Verfügung stellt.

5. Flugzeug gemäß einem der Ansprüche 1 bis 4, das weiterhin umfasst:
ein Außenbord-Fenster (132) in der Toilette (72).

6. Flugzeug gemäß Anspruch 1, wobei:
der Abstand, um den der obere Abschnitt (96) der ersten Innenwand seitlich von der ersten inneren Seitenwand des Flugzeugkörpers (12) beabstandet ist, größer ist als ein Abstand, um den der obere Abschnitt (164) der zweiten Innenwand seitlich von der zweiten inneren Seitenwand des Flugzeugkörpers (12) beabstandet ist.

7. Flugzeug gemäß Anspruch 1, wobei:
die längliche Länge des oberen Abschnitts (96) der ersten Innenwand größer ist als die längliche Länge des unteren Abschnitts (92) der ersten Innenwand.

8. Flugzeug gemäß einem der Ansprüche 1 bis 7, das weiterhin umfasst:
einen Abfallbehälter (192) unter der Arbeitsfläche (48);
eine erste Zugangsöffnung (194) in der Arbeitsfläche (48), die einen Zugang zu dem Abfallbehälter (192) ermöglicht; und
eine zweite Zugangsöffnung (196) in der ersten Innenwand (86), die einen Zugang zu dem Abfallbehälter (192) ermöglicht.

9. Flugzeug gemäß Anspruch 1, wobei:
der obere Abschnitt (122) der ersten Innenwand linke und rechte Kanten (124, 126) aufweist; und
ein Zwischenteil (128) des oberen Abschnitts (122) der ersten Innenwand sich zwischen der linken und der rechten Kante (124, 126) weg von der Toilette (72) und in Richtung der Arbeitsfläche (48) erstreckt.

10. Flugzeug gemäß Anspruch 1, wobei:
die Bodenfläche (112) der Toilette eine vordere Kante (114) an der Bodenfläche der Flugzeugkabine und eine in der Längsrichtung gegenüber liegende hintere Kante (116) aufweist, die Bodenfläche (112) der Toilette sich von einer Horizontalen nach unten neigt, wobei die Bodenfläche (112) der Toilette sich von der vorderen Kante (114) nach hinten zu der hinteren Kante (116) erstreckt.

## Revendications

1. Avion comprenant :
un corps d'avion (12) contenant une cabine d'avion, la cabine d'avion présentant une longueur longitudinale entre l'avant de la cabine (14) et l'arrière de la cabine (16), et la cabine d'avion présentant une largeur latérale entre des première (18) et deuxième (22) parois latérales intérieures opposées du corps d'avion (12),
une surface de plancher (28) dans la cabine d'avion,
des toilettes (72 et 74) dans la cabine d'avion,
un espace de rangement (34) dans la cabine d'avion,
une surface de travail (48) horizontale située au-dessus de l'espace de rangement (34), la surface de travail (48) présentant un bord avant et un bord arrière opposé, un bord gauche et un bord droit opposé,
une première paroi interne (86) dans la cabine d'avion située latéralement entre les toilettes (72) et l'espace de rangement (34), la première paroi interne (86) présentant une section inférieure (92), une section intermédiaire (94) et une section supérieure (96) qui sont toutes interconnectées, la section inférieure (92) s'étendant verticalement vers le haut à partir de la surface de plancher (28) entre une zone inférieure des toilettes (72) et une zone inférieure de l'espace de rangement (34) vers la section intermédiaire (94), la section intermédiaire (94) étant dans la continuité de la surface de travail (48) et s'étendant horizontalement sur la zone inférieure de l'espace de rangement (34) à partir de la section inférieure (92) et vers la section supérieure (96), et la section supérieure (96) s'étendant verticalement vers le haut à partir de la section intermédiaire (94) entre une zone supérieure des toilettes (72) et une zone supérieure de l'espace de rangement (34), la dimension de largeur latérale des toilettes (72) existant au-dessus de la section intermédiaire est supérieure à la dimension de largeur latérale la plus grande des toilettes (72) existant au-dessous de la section intermédiaire, et
une deuxième paroi interne (88) dans la cabine d'avion, la deuxième paroi interne (88) présentant une section supérieure (164) de deuxième paroi interne qui s'étend vers le haut à partir de la surface de travail (48) et est écartée latéralement de la section supérieure (96) de la première paroi interne ;
**caractérisé en ce que** :
une séparation verticale (162) est rattachée à la section supérieure (96) de la première paroi interne, la séparation (162) étant mobile entre une position ouverte et une position fermée dans laquelle elle peut être verrouillée, et, dans la position fermée, la séparation (162) s'étend latéralement sur la surface de travail (48) entre la section supérieure (96) de la première paroi interne et la section supérieure (164) de la deuxième paroi interne, et dans la position ouverte, la séparation (162) est rabattue en s'écartant de la surface de travail (48), et
la section supérieure (96) de la première paroi interne est mobile entre une position ouverte et une position fermée, et, dans la position fermée, la section supérieure (96) de la première paroi interne s'étend entre la section intermédiaire de la première paroi interne et la surface de travail (48) en séparant les toilettes (72) de la surface de travail (48), et, dans la position ouverte, la section supérieure (96) de la première paroi interne s'étend sur la surface de travail (48) en permettant l'accès à la surface de travail (48) depuis les toilettes (72).

2. Avion selon la revendication 1, comprenant en outre :
une tablette rabattable (144) sur la première paroi interne (86), la tablette rabattable (144) étant mobile entre une position horizontale et une position verticale.

3. Avion selon l'une quelconque des revendications 1 et 2, comprenant en outre :
une poignée d'assistance (156) sur la première paroi interne (86).

4. Avion selon l'une quelconque des revendications 1 à 3, comprenant en outre :
une source lumineuse (198) qui s'étend latéralement sur la section supérieure (96) de la première paroi interne pour fournir de la lumière aux toilettes (72) et à la surface de travail (48).

5. Avion selon l'une quelconque des revendications 1 à 4, comprenant en outre :
une fenêtre vers l'extérieur (132) prévue dans les toilettes (72).

6. Avion selon la revendication 1, dans lequel :
la section supérieure (96) de la première paroi interne se trouve à une plus grande distance, latéralement, de la première paroi latérale intérieure du corps d'avion (12) que ne se trouve la section supérieure (164) de la deuxième paroi interne vis-à-vis, latéralement, de la deuxième paroi latérale intérieure du corps d'avion (12).

7. Avion selon la revendication 1, dans lequel :
la longueur longitudinale de la section supérieure (96) de la première paroi interne est supérieure à la longueur longitudinale de la section inférieure (92) de la première paroi interne.

8. Avion selon l'une quelconque des revendications 1 à 7, comprenant en outre :
une poubelle (192) sous la surface de travail (48),
une première ouverture d'accès (194) dans la surface de travail (48) permettant un accès à la poubelle (192), et
une deuxième ouverture d'accès (196) dans la première paroi interne (86) permettant un accès à la poubelle (192).

9. Avion selon la revendication 1, dans lequel :
la section supérieure (122) de la première paroi interne présente des bords gauche et droit (124, 126), et
une partie intermédiaire (128) de la section supérieure (122) de la première paroi interne située entre les bords gauche et droit (124, 126) s'éloigne des toilettes (72) en direction de la surface de travail (48).

10. Avion selon la revendication 1, dans lequel :
la surface de plancher (112) des toilettes présente un bord avant (114) au niveau de la surface de plancher de la cabine d'avion et un bord arrière (116), longitudinalement opposé, la surface de plancher (112) des toilettes étant en pente descendante par rapport à l'horizontale, la surface de plancher (112) des toilettes s'étendant vers l'arrière entre le bord avant (114) et le bord arrière (116).
